# EUROPEAN PATENT APPLICATION

(11) **EP 4 307 194 A1**
(43) Date of publication of application: **17.01.2024**
(21) Application number: 22185247.8
(22) Date of filing: 15.07.2022
(51) Int. Cl.: G06Q 10/08, A47G 29/10, G06K 19/04

(54) **METHOD OF MANAGING PHYSICAL KEYS**

(71) Applicant: Nagravision Sàrl, 1033 Cheseaux-sur-Lausanne (CH)
(72) Inventor: AGRAWAL, Dilip Kumar, 1033 Cheseaux-sur-Lausanne (CH)
(74) Representative: Novagraaf International SA

(57) **Abstract**

Each physical key (Ki) has a key tag (TGi) including a machine-readable identifier (QR-Ci). The method comprises the following steps performed by a key management server (200):
- receiving a request for identifying a position of a requested physical key (Kj) in a key container (300), through a first communication link (L2);
- receiving, from a camera device (320), image data (IM) of a key storage area (310) of the key container (300), through a second communication link (L1);
- searching, in the image data (IM), for the machine-readable identifier (QR-Cj), of the requested physical key (Kj);
- if the machine-readable identifier (QR-Cj) of the requested physical key (Kj) can be found in the image data (IM), determining a position information (Pj) of the requested physical key (Kj) in the key storage area (310) from the image data (IM) and transmitting the position information (Pj) through at least one of the first and second communication link (L1, L2).

## Description

### TECHNICAL FIELD

The present disclosure relates to the field of physical key management systems.

### BACKGROUND

Some organizations use a large number of physical keys and have to administer the use of these keys. Key management should track where keys are, and who holds them.

Key management systems may be used to administer the use of keys for a large fleet of vehicles, e.g., at a car dealership. The keys are generally stored in a key container or locker, in a centralized location, for example at a car dealership showroom. When a customer wants to test drive a car, an executive person of the car leadership has to go to the key locker and pick the car key. But, as there are many keys in the key locker, it may be difficult to quickly determine if the wanted car key is present or missing and, if it is present, identify the car key he should pick among all the car keys present in the key locker.

Therefore, there is a need for improving the situation, in particular to more quickly find out a key in the key container.

### SUMMARY

The present disclosure concerns a method of managing a plurality of physical keys, each physical key having a key tag including a machine-readable identifier, comprising the following steps performed by a key management server:
- receiving a request for identifying a position of a requested physical key in a key container, through a first communication link;
- receiving, from a camera device, image data of a key storage area of the key container, through a second communication link;
- searching, in the image data, for the machine-readable identifier of the requested physical key;
- if the machine-readable identifier of the requested physical key can be found in the image data, determining a position information of the requested physical key in the key storage area from the image data and transmitting the position information through at least one of the first and second communication link.

The present method allows to find out a requested physical key very quickly in the key container, among all physical keys stored therein. Furthermore, the method is based on an low-cost infrastructure.

In an embodiment, the method may further include a step of retrieving from a database the machine-readable identifier linked to the requested physical key, and wherein, the step of searching, in the image data, for the machine-readable identifier of the requested physical key includes finding the retrieved machine-readable identifier within the image data.

The image data may include a plurality of machine-readable identifiers of respective physical keys stored in the key container. The server may map the machine-readable identifier retrieved from the database, corresponding to the requested key, with the machine-readable identifiers contained in the received digital image to identify one machine-readable identifier from the digital image matching the retrieved machine-readable identifier.

In an embodiment, the key storage area being configured to store physical keys in a two-dimensional array with rows and columns, the transmitted position information may include a pair of row and column of the requested physical key.

Advantageously, if the machine-readable identifier of the requested physical key cannot be found in the image data, the method may further include a step of transmitting a signal indicating that the requested physical key is not available through at least one of the first and second communication link.

In an embodiment, the position information of the requested physical key in the key storage area may be transmitted to the key container through the second communication link, and, upon receiving said position information, the key container turns on a light-emitting device associated with the received position in the key storage area.

The server may transmit the position information of the requested key to the key container so that the key container turns on a light-emitting device disposed at the position of the requested key or proximal to said position in the storage area. In this way, a user can easily identify where the requested key is located.

In an embodiment, the method may further include, after the step of transmitting said position information of the requested physical key in the key storage area, a step of receiving event information related to the requested physical key at the key management server through the first communication link, and a step of recording the received event information in the database, said received event information including at least one of a time information indicating when said physical key has been removed from the key container and a user identification data indicating who has removed said physical key from the key container.

In an embodiment, the method may further include the following steps: entering an asset identifier or location identifier with a user device, the requested physical key granting access to said asset or location;
transmitting the request for identifying a position of the physical key in the key container, from the user device to the key management server through the first communication link, said request including the entered asset identifier or location identifier;
by the server, searching in the database for the transmitted asset identifier or location identifier and retrieving from the database the machine-readable identifier stored in association with said transmitted asset identifier or location identifier.

In an embodiment, the method may further include the step of transmitting to the key container a control signal for capturing image data of the key storage area.

The control signal for capturing an image may be transmitted from the server or from the user device.

Advantageously, upon receiving the control signal for capturing image data of the key storage area, the key container may control the camera device to capture image data of the key storage area and then transmit the captured image data to the key management server.

The physical keys may be vehicle keys.

The present disclosure also concerns:
- a key management server of managing a plurality of physical keys, each physical key having a tag including a machine-readable identifier, adapted to perform the steps of the method previously defined;
- a key container comprising a key storage area for storing a plurality of physical keys, a camera device configured to capture images of the key storage area, and a communication module configured to transmit image data of the key storage area captured by the camera device to the key management server, through a communication link;
- a distributed physical key management system of managing a plurality of physical keys, comprising:
   a key management server as above-defined;
   a key container as above-defined;
   a plurality of key tags respectively attached to the plurality of physical keys, each key tag having a machine-readable identifier;
   a user device configured to transmit a request for identifying a position of a requested physical key in the key container to the key management server, through a communication link.

In an embodiment, the physical key management system may be adapted to perform the steps of the method previously defined.

The present disclosure also concerns
- a computer program comprising instructions which, when the program is executed by a computer, cause the computer to carry out the steps of the method previously defined;
- a computer program comprising instructions which, when the program is executed by the distributed system, cause the distributed system to carry out the steps of the method previously defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 represents a distributed system of managing a plurality of physical keys, according to an embodiment.
Figure 2 represents a first communication diagram related to an operation of picking a physical key from a key container of the distributed system of figure 1, in case the key is present in the key container, according to an embodiment.

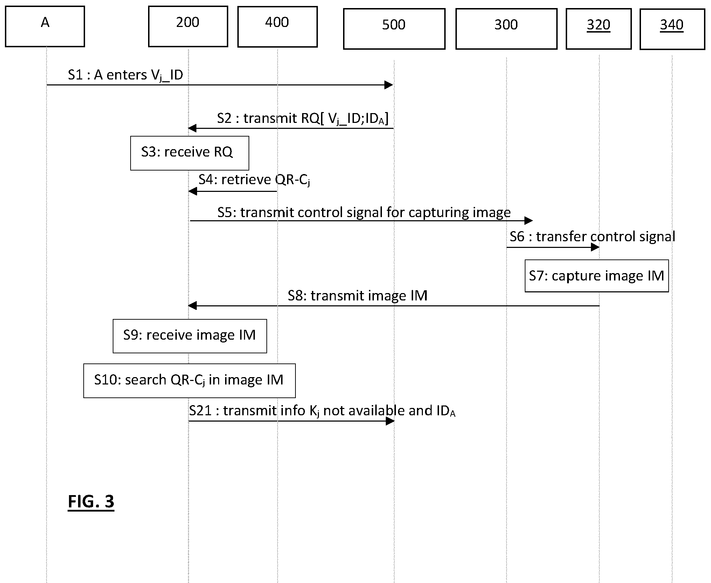

Figure 3 represents a second communication diagram related to an operation of requesting a physical key, in case the key is missing from the key container, according to an embodiment.
Figure 4 represents a communication diagram related to an operation of returning the picked key into the key container, according to an embodiment.
Figure 5 represents a communication diagram related to a process of producing a machine-readable identifier for a physical key.

### DETAILED DESCRIPTION

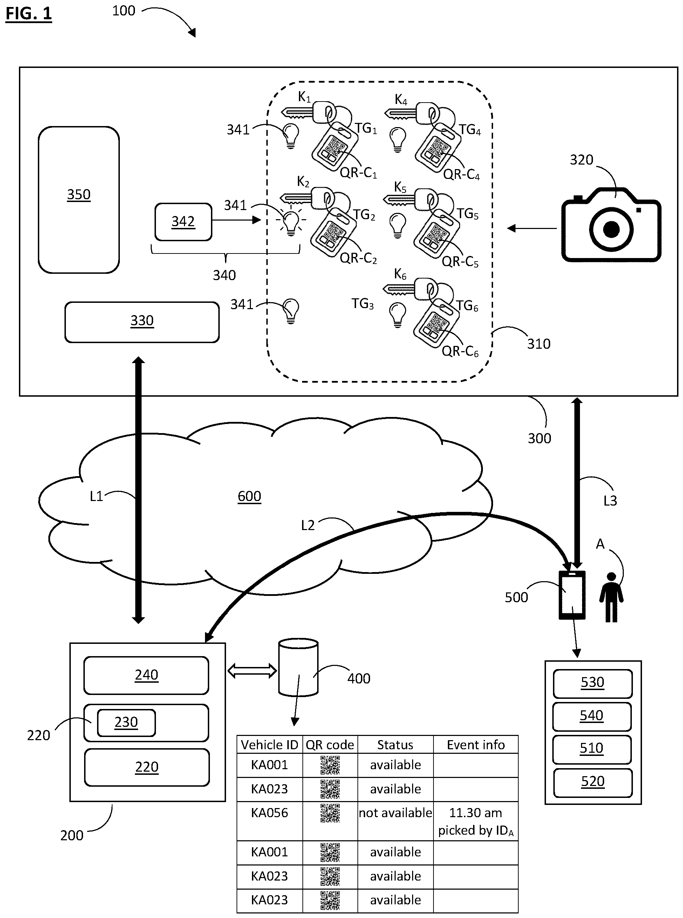

Figure 1 shows an implementation of a distributed system 100 of managing a plurality of physical or mechanical keys Kᵢ, with i≥1, according to an embodiment. For example, the system 100 can be used to administer the use of a plurality of physical keys K₁, K₂, ... for a fleet of vehicles Vᵢ, with i≥1.

In other examples, the system 100 may be used to administer the use of physical keys for granting access to other assets or locations.

In an embodiment, the distributed system 100 may comprise a key management server 200, a key container 300, and a user device 500.

Each key Kᵢ is attached to a key tag TGᵢ, with i≥1, or key label, having an allocated or dedicated machine-readable identifier for example printed on it. The machine-readable identifier of a physical key Kᵢ may be a machine-readable code uniquely allocated to the key Kᵢ. The machine-readable code may be a QR code, noted QR-Ci, consisting of an array of black and white squares. The machine-readable code may contain an identifier of the key Ki. Alternatively, the machine-readable code may be a bar code, or another type of machine-readable optical code.

The key container 300 has the role of storing the plurality of physical or mechanical keys Kᵢ, for example when these keys are not in use. The key container 300 has a key storage area 310, such as a key rack, for storing the plurality of keys Kᵢ, for example when the keys Kᵢ are not in use. The key storage area 310 may have reception elements, such as hooks, for receiving the keys Kᵢ at predetermined storage positions in the storage area 310. For example, the reception elements may be arranged to store the physical keys Kᵢ in a two-dimensional array with storage rows and columns. However, other configurations may be used to position the keys Kᵢ in the storage area 310. The keys Kᵢ may be stored in any predetermined position, or order, in the storage area 310.

The access to the key storage area 310 may be secured, by any secure mechanism for securely granting access to the key storage area 310.

The key container 300 may also include a camera device 320, or an image sensor, a communication module 330, a light-emitting system 340, and a control unit 350.

The camera device 320 may be arranged to capture digital images of the key storage area 310. The captured images should preferably include all the positions for receiving physical keys Kᵢ within the key storage area 310. For example, the camera device 320 may be disposed in front of the key storage area 310. Furthermore, the key tags TGᵢ of the physical keys Kᵢ stored in the storage area 310 should be arranged so that the machine-readable identifiers, here the QR codes QR-Cᵢ, are visible from the camera device 320.

The key container 300 is connected to the key management server 200, through the communication module 330, via a communication link L1.

The light-emitting system 340 may include a plurality of light-emitting devices 341, for example LEDs, respectively associated to the plurality of predetermined positions for receiving physical keys Kᵢ within the key storage area 310. Each light-emitting device 341 may be disposed at the associated predetermined position or proximal to said associated predetermined position for receiving a physical key Kᵢ. The light-emitting system 340 may optionally include a driver or controller 342 for controlling the actions of selectively turning on or off the light-emitting devices 341.

The light-emitting system 340 may be replaced by any appropriate system or means operable for signaling to a user the position of a requested key.

The control unit 350 may be implemented with hardware and software. For example, the control unit 350 may include a processor or a computer and a key management application installed thereon. It is connected to the camera device 320, the communication module 330, and the light-emitting system 340, and configured to control the operation of these elements 320, 330, 340.

In another embodiment, the control unit 350 may be included in the camera device 320.

The key management server 200 has the role of managing or administering the plurality of physical keys Kᵢ. The server 200 may be a remote server located remotely from the key container 300, or a local server located close to the key container 300. The server 200 may be implemented in a cloud system.

The key management server 200 comprises hardware and software for carrying out the steps of the method, described later, of managing the plurality of physical keys Kᵢ, that are performed by the server 200. For example, the hardware and software include a processor 210 and a software application 220 of physical key management, installed thereon, for carrying out the method steps described later. The application 220 may include a module 230 of processing machine-readable identifiers, such as QR codes.

The key management server 200 has a communication module 240 to communicate with the key container 300 and the user device 500, through communication links L1, L2. If the key management server 200 is remote, the communication links L1, L2 may be through a communication network 600, for example Internet or another network. If the key management server 200 is local, the communication links may be through a local communication network or via direct connections.

The key management server 200 has access to a database 400 that may be internal or external to the server 200. The database 400 may be implemented in a cloud system.

The database 400 stores the machine-readable identifiers, such as the QR codes QR-Ci, of the plurality of physical keys Kᵢ, in digital form. In an embodiment, each machine-readable identifier QR-Ci may be stored in association with a vehicle identifier V_{i_}ID of the vehicle Vi for which said key Ki grants access, in the database 400. Thus, the database 400 may store, for each physical key Ki, the machine-readable identifier QR-Ci allocated to said key Ki in association with, or linked to, the vehicle identifier V_{i_}ID of the vehicle Vi for which said key Ki grants access. The vehicle identifier V_{i_}ID may be for example a registration number of the vehicle Vi.

Figure 1 shows an example the content of the database 400.

In the database, the same vehicle (or asset or location) identifier can be associated with several machine-readable identifiers, in case the system manages several physical keys for the same vehicle. In the illustrative example of figure 1, the vehicle KA0023 has two physical keys with two respective distinct QR-codes recorded in the database 400.

In other embodiments, if the keys Ki are for granting access to other assets or to locations, the machine-readable identifiers of the plurality of keys Ki may be stored with respective asset identifiers or location identifiers.

The vehicle identifiers or asset identifiers or location identifiers may have a suitable form to be able to be entered through a user interface of a user device, by a user. For example, it may be a series of alphanumeric characters.

The database 400 may store, for each key Kᵢ, a key status information indicating if the key is available or not available in the key storage area 310 of the key container 300. The key status information of each key Ki may be stored in association with the machine-readable identifier allocated to said key Ki.

Optionally, the database 400 may store additional information related to physical keys Kᵢ. For example, for keys having the status "not available", the database 400 may further store an event information indicating when the physical key has been removed from the key container and/or who has removed said physical key from the key container 300.

The user device 500 is a communication device, for example a mobile communication device, such as a smartphone or a tablet, that is connected to the key management server 200 through a communication link L2 and to the key container 300 through another communication link L3. For example, if the server 200 is remote, the user device 500 may be wirelessly connected to the server 200 through the Internet 600 or another network, and to the key container 300 through a local network (e.g., via WiFi).

The user device 500 allows a user to enter a vehicle identifier for which a user wants to obtain the physical key. Upon entry of the vehicle identifier, it is further configured to transmit the entered vehicle identifier to the key management server 200 and a control signal for capturing an image to the camera device 320. The user device 500 may be implemented with hardware and software to carry out those of the steps of the method of managing the plurality of keys Kᵢ described later, that are performed by the user device 500. For example, the hardware and software include a processor 510 and an software application 520 of physical key management installed on the processor. Furthermore, the user device 500 has a communication module 530 and a user interface 540.

The method of managing the plurality of physical keys Kᵢ, with i ≥1, will now be described, according to an embodiment. In the described embodiment, the physical keys Kᵢ are vehicle keys of the fleet of vehicles Vᵢ, for example at a vehicle dealership. The method would be analogous for physical keys granting access to other assets or locations.

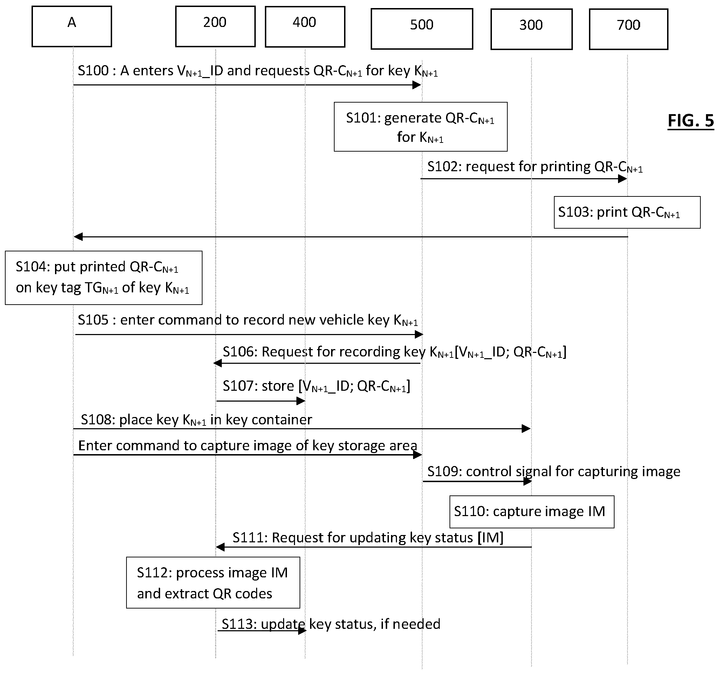

The process of producing a machine-readable identifier for a physical key is illustrated in figure 5 and will first be described, according to an embodiment.

Let's consider for example that a new vehicle V_{N+1} is added into the fleet of vehicles Vᵢ, with 1≤i≤N. In such a case, a key tag TG_{N} with a machine-readable identifier, such as a QR code QR-C_{N}, needs to be produced for a physical key K_{N+1} of the new vehicle V_{N+1}. For that purpose, a user (e.g., an executive person of the car dealership) may enter a vehicle identifier V_{N+1_}ID, such as a registration number, of the new vehicle V_{N+1} with the user device 500 and request the generation of the machine-readable identifier QR-C_{N+1} for a key K_{N+1} of the new vehicle V_{N+1} with the user device 500, in a step S100. Then, the user device 500 may generate the machine-readable identifier QR-C_{N+1} for the new vehicle key K_{N+1} in a step S101, and transmit a request for printing the generated machine-readable identifier QR-C_{N+1} to a printing device 700, in a step S102. In a step S103, the printing device 700 may print the received machine-readable identifier QR-C_{N+1}. The printed machine-readable identifier OR-C_{N+1} may then be put on a key tag TG_{N+1} that is attached to the vehicle key K_{N+1}, for example by the user A, in a step S104.

In a next step, upon instruction of the user A in a step S105, the user device 500 may transmit to the key management server 200 a request for recording the new vehicle key K_{N+1}, in a step S106 The request may include the vehicle identifier V_{N+1}_ID of the new vehicle V_{N+1} and the generated machine-readable identifier QR-C_{N+1}.

The key management server 200 may store the received vehicle identifier V_{N+1}_ID and machine-readable identifier QR-C_{N+1}, in association with each other, in the database 400, in a step S107.

Finally, in a step S108, the user may place the key K_{N+1} of the new vehicle V_{N+1} in the storage area 310 of the key container 300, at one of the predetermined storage positions still available. The tag TG_{N+1} should be oriented to be visible by the camera device 320.

Optionally, in a step S109, upon command of the user A, the user device 500 may transmit a control signal for capturing an image of the key storage area 310 to the key container 300. Then, the camera device 320 may capture a digital image of the key storage area 310, in a step S110,and automatically transmit a request for updating key status including the captured image data to the server 200, via the communication link L1, in a step S111. Upon receiving the request, the server 200 may process the received image data to extract the QR codes contained in the received image, in a step S112, search for each extracted QR code in the database 400, check if the status associated with each extracted QR code in the database 400 is available, and update the status associated with the extracted QR code if necessary, in a step S113. This allows to update the status available of the new key K_{N+1.}

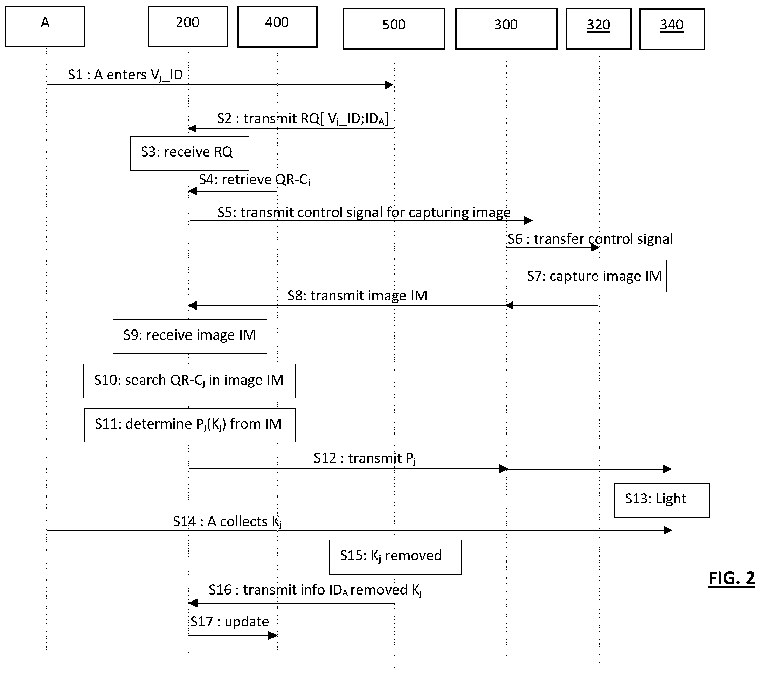

The process of collecting a vehicle key Kⱼ of a given vehicle Vⱼ stored in the key container 300 will now be described, according to an embodiment, with reference to figure 2.

In a step S1, a user A (e.g., an executive person) enters the vehicle identifier Vⱼ_ID with the user device 500.

In a step S2, the user device 500 may transmit to the key management server 200 a request RQ for identifying a position of the physical key Kⱼ of the vehicle Vⱼ in the key container 300, through the communication link L1. This request RQ may include the entered vehicle identifier Vⱼ_ID. Optionally, the request RQ may include an identifier ID_{A} of the user A requesting the vehicle key Kⱼ.

In a step S3, the server 200 receives the request RQ including the vehicle identifier Vⱼ_ID and optionally the user identifier ID_{A} of the user A requesting the vehicle key Kⱼ.

Then, the server 200 performs a step S4 of retrieving from the database 400 the machine-readable identifier, here the QR code QR-Cⱼ, linked to the requested physical key Kⱼ. For that purpose, the server 200 may search in the database 400 for the received vehicle identifier Vⱼ_ID, and retrieve from the database 400 the machine-readable identifier that is stored in association with the received identifier Vⱼ_ID in the database 400. The retrieved machine-readable identifier corresponds to the machine-readable identifier QR-Cⱼ of the requested physical key Kⱼ. The step S4 may be performed by the QR code processing module 230 running on the processor 210.

In a step S5, the server 200 may transmit to the key container 300, through the communication link L1, a control signal for capturing an image of the key storage area 310. This control signal is transferred to the camera device 320, in a step S6.

In another embodiment, the control signal for capturing an image of the key storage area 310 may be transmitted by the user device 500 to the camera device 320, through the communication link L3, either directly to the camera device 320 or through the control unit 350 and/or communication module 330 of the key container 300.

In a step S7, the camera device 320 may capture a digital image IM of the storage area 310. This image IM includes the machine-readable identifiers, here the QR codes, of all the physical keys currently stored in the storage area 310.

In a next step S8, the image data IM may be transmitted to the server 200, through the communication link L1. The transmission may be handled by the control unit 350 and/or the communication module 330. Alternatively, the camera device 320 may include communication means and directly transmit the image data to the server 200.

The image data IM is received by the server 200 in a step S9.

In a step S10, the server 200 may search, in the image data IM, for the machine-readable identifier, here the QR code QR-Cⱼ of the requested physical key Kᵢ, determined in the step S4 from the received request RQ and the database 400. In other words, the server 200 may map the extracted QR code QR-Cⱼ with the image data IM to find the same QR code QR-Cⱼ in the image data IM, by image data analysis.

If the QR code QR-Cⱼ of the requested physical key Kⱼ can be found in the received image data IM in the step S10, the server 200 may determine a position information Pⱼ of the requested physical key Kⱼ in the key storage area 310 from the image data IM, in a step S11. In case the storage area 310 is arranged to store the physical keys in a two-dimensional array with storage rows and columns, the position information Pⱼ of the requested physical key Kⱼ may include a pair of row and column corresponding to the position of the requested physical key Kⱼ in the storage area 310. In the illustrative example of figure 1, the information position Pⱼ includes the pair (2,1) indicating row n°2 and column n°1 as position of the requested key Kⱼ.

Then, in a step S12, the server 200 may transmit to the key container 300 a signal including said determined position information Pⱼ through the communication link L1.

Alternatively, or additionally, the server 200 may transmit the signal indicating said determined position information Pⱼ to the user device 500 through the communication link L2. Then, the user device 500 may provide the position information Pⱼ to the user A, via the user interface 540.

In a step S13, upon receiving the position information Pⱼ of the requested physical key Kᵢ, the light-emitting system 340 may turn on the light-emitting device 341 associated with the received position Pⱼ. Preferably, the other light-emitting devices that do not correspond to the received position Pⱼ are maintained turned off. For example, the control unit 350 of the key container 300 may receive the signal indicating said determined position information Pⱼ and then transmit a control signal for turning on the light-emitting device 341 corresponding to the position Pⱼ to the light-emitting system 340.

In the step S13, the light-emitting device 341 at the received position Pⱼ or proximal to the received position Pⱼ, may emit light, while the other light-emitting devices of the key storage area 310 may be turned off.

In a step S14, the user A can collect the requested physical key Kⱼ at the position Pⱼ identified by the light-emitting device 341 that is turned on, and remove it from the key container 300.

Optionally, in a step S15, the user A may confirm that he removed the physical key Kⱼ from the key container 300, via the user interface of the user device 500.

In a step S16, the user device 500 may transmit to the server 200 a message or signal containing the event information that the user A removed the key Kⱼ from the key container 300. The message may optionally include the user A identifier ID_{A}.

In a step S17, the server 200 may update the database 400 by recording the received event information related to the key Kⱼ. The event information may include the identifier of the user A, transmitted in the step S2 and/or in the step S16, and/or a time information indicating when the user A removed the key Kⱼ from the key container 300 (e.g., reception time of the message in the step S17).

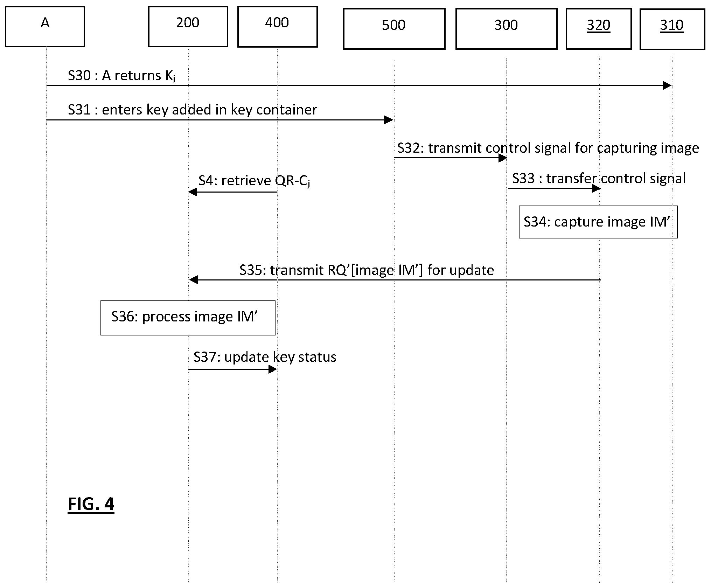

Figure 4 illustrates the use case when the key Kⱼ requested by the user A is not available in the key container 300.

The steps S1 to S10 are identical to the corresponding steps of figure 2.

Then, if the QR-code QR_Cⱼ of the requested physical key Kⱼ cannot be found in the image data IM in the search step S10, the server 200 may transmit a signal or message indicating that the requested physical key Kⱼ is not available in the key container 300 to the user device 500, through the communication link L2, in a step S21. Then, the user device 500 may inform the user A that the requested key Kⱼ is not available through the user interface 540 of the user device 500, for example a display or a loudspeaker.

Alternatively, or additionally, the signal or message indicating that the requested physical key Kⱼ is not available in the key container 300 may be transmitted to the key container 300. Then, the key container 300 may inform the user A that the requested key Kⱼ is not available through a user interface of the key container 300, for example a display or a loudspeaker.

The process of returning the physical key Kⱼ into the key container 300 will now be described in reference with figure 4.

In a step S30, the user A may return the physical key Kⱼ into the key storage area 310 of the key container 300, at a predetermined storage position in the two-dimensional storage array.

Then, in a step S31, the user A may enter the information that a key has been added into the key container 300 with the user device 500, via a user interface.

In a step S32, the user device 500 may transmit a control signal for capturing an image of the key storage area 310 to the key container 300, in a step S32. The control signal may be transferred to the camera device 320 in a step S33, for example via the control unit 350 of the key container 300.

In a next step S34, the camera device 320 may capture a digital image IM' of the key storage area 310. Then, the key container 300 may transmit a request RQ' for updating key status including the captured image data IM' to the server 200, via the communication link L1, in a step S35. Optionally, the request may further include the user identifier ID_{A}.

Upon receiving the request RQ', the server 200 may process the received image data IM' to extract the QR codes contained in the image IM', in a step S36, search for each extracted QR code in the database 400, check if the status associated with each extracted QR code in the database 400 is available, and update the status if necessary, in a step S37. For each QR code extracted from the received image data IM',
- if the status available is associated with said QR code in the database 400, this status available remains unchanged in the database 400,
- if the status not available is associated with said QR code in the database 400, this status is changed into available in the database 400.

Optionally, if the QR code status is changed into available in the database 400, the server 200 may store additional information in association with the QR code in the database 400, such as an event information indicating when the physical key Kⱼ was placed back in the key container 300, and/or who placed back the physical key Kⱼ,. Thus, the event information may include namely the reception time of the request RQ' and/or the user A identifier ID_{A}.

Optionally, the key container 300 may be configured to periodically capture an image of the key storage area and transmit the captured image data to the key management server 200 to update the status of the keys Kᵢ in the database, based on the captured image.

Alternatively, the image(s) of the key storage area 310 could be captured and transmitted to the server 200 by the user device 500.

## Claims

1. A method of managing a plurality of physical keys (Kᵢ), each physical key (Kᵢ) having a key tag (TGᵢ) including a machine-readable identifier (QR-Cᵢ), comprising the following steps performed by a key management server (200):
- receiving (S2) a request for identifying a position of a requested physical key (Kⱼ) in a key container (300), through a first communication link (L2);
- receiving (S9), from a camera device (320), image data (IM) of a key storage area (310) of the key container (300), through a second communication link (L1);
- searching (S10), in the image data (IM), for the machine-readable identifier (QR-Cⱼ) of the requested physical key (Kⱼ);
- if the machine-readable identifier (QR-Cⱼ) of the requested physical key (Kⱼ) can be found in the image data (IM), determining (S11) a position information (Pj) of the requested physical key (Kⱼ) in the key storage area (310) from the image data (IM) and transmitting the position information (Pⱼ) through at least one of the first and second communication link (L1, L2).

2. The method according to claim 1, further including a step (S4) of retrieving from a database (400) the machine-readable identifier (QR-Cⱼ) linked to the requested physical key (Kⱼ), and wherein, the step of searching (S10), in the image data (IM), for the machine-readable identifier (QR-Cⱼ) of the requested physical key (Kⱼ) includes finding the retrieved machine-readable identifier within the image data.

3. The method according to any of claims 1 and 2, wherein, the key storage area (310) being configured to store physical keys in a two-dimensional array with rows and columns, the transmitted position information (Pⱼ) includes a pair of row and column of the requested physical key (Kⱼ).

4. The method according to any of claims 1 to 3, wherein if the machine-readable identifier (QR-Cⱼ) of the requested physical key (Kⱼ) cannot be found in the image data (IM), the method further includes the step of transmitting a signal indicating that the requested physical key (Kⱼ) is not available through at least one of the first and second communication link (L1, L2).

5. The method according to any of claims 1 to 4, wherein the position information (Pⱼ) of the requested physical key in the key storage area (310) is transmitted to the key container (300) through the second communication link (L1), and, upon receiving said position information (Pⱼ), the key container (300) turns on a light-emitting device (341) associated with the received position (Pⱼ) in the key storage area (310).

6. The method according to any of claims 1 to 5, further including, after the step of transmitting said position information (Pⱼ) of the requested physical key (Kⱼ) in the key storage area (310), a step (S16) of receiving event information related to the requested physical key (Kⱼ) at the key management server (200) through the first communication link (L2), and a step (S17) of recording the received event information in the database (400), said received event information including at least one of a time information indicating when said physical key has been removed from the key container and a user identification data indicating who has removed said physical key from the key container.

7. The method according to any of claims 1 to 6, further including the following steps:
entering (S1) an asset identifier or location identifier with a user device (500), the requested physical key (Kⱼ) granting access to said asset (Vⱼ) or location;
transmitting (S2) the request for identifying a position of the physical key in the key container (300), from the user device (500) to the key management server (200) through the first communication link (L2), said request including the entered asset identifier or location identifier;
by the server (200), searching (S4) in the database (400) for the transmitted asset identifier or location identifier (QR-Cⱼ) and retrieving from the database (400) the machine-readable identifier (QR-Cⱼ) stored in association with said transmitted asset identifier or location identifier (QR-Cⱼ).

8. The method according to any of claims 1 to 7, further comprising transmitting (S5) to the key container (300) a control signal for capturing image data of the key storage area (310).

9. The method according to claim 8, wherein, upon receiving the control signal for capturing image data of the key storage area (310), the key container (300) controls the camera device (320) to capture image data of the key storage area (310) and then transmits (S8) the captured image data to the key management server (200).

10. The method according to any of claims 1 to 9, wherein the physical keys (Kᵢ) are vehicles keys.

11. A physical key management server (200) of managing a plurality of physical keys, each physical key (Kᵢ) having a tag (TGᵢ) including a machine-readable identifier (QR-Ci₎,, adapted to perform the steps of claim 1.

12. A key container (300) comprising a key storage area (310) for storing a plurality of physical keys (Kᵢ), a camera device (320) configured to capture images of the key storage area (310), and a communication module (330) configured to transmit image data (IM) of the key storage area (310) captured by the camera device (320) to a key management server (200), through a communication link (L1).

13. A distributed physical key management system (10) of managing a plurality of physical keys (Kᵢ), comprising:
- a key management server (200) according to claim 11;
- a key container (300) according to claim 12;
- a plurality of key tags (TGᵢ) respectively attached to the plurality of physical keys (Kᵢ), each key tag (TGᵢ) having a machine-readable identifier (QR-Cᵢ);
- a user device (500) configured to transmit a request for identifying a position (Pⱼ) of a requested physical key (Kⱼ) in the key container (300) to the key management server (200), through a communication link (L2).

14. The physical key management system according to claim 13, adapted to perform the steps of any of claims 1 to 10.

15. A computer program comprising instructions which, when the program is executed by a computer, cause the computer to carry out the steps of the method of claim 1.
